(19) Europäisches Patentamt
European Patent Office
Office européen des brevets

(11) **EP 1 870 210 A1**

(12) **EUROPEAN PATENT APPLICATION**

(43) Date of publication:
**26.12.2007 Bulletin 2007/52**

(51) Int Cl.:
**B25J 9/16** (2006.01)

(21) Application number: **06012899.8**

(22) Date of filing: **22.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Honda Research Institute Europe GmbH**
**63073 Offenbach/Main (DE)**

(72) Inventors:
• **Janssen, Herbert, Dr.**
**63165 Mühlheim (DE)**
• **Bolder, Bram, Dr.**
**63225 Langen (DE)**

(74) Representative: **Rupp, Christian et al**
**Mitscherlich & Partner**
**Patent- und Rechtsanwälte**
**Sonnenstrasse 33**
**80331 München (DE)**

(54) **Evaluating visual proto-objects for robot interaction**

(57) An interactive robot comprises visual sensing means, manipulation means and computing means.

The computing means are designed to
- process output signals from the visual sensing means in order to generate proto-objects which are stored in a memory,
the proto-objects representing blobs of interest in the input field of the visual sensing means at least by a 3d position label,
- form object hypotheses as to the category of the object based on an evaluation of the proto-objects with respect to different behaviour-specific constraints,
- based on the hypotheses and at least one proto-object as a target for a movement, decide on at least one of a visual tracking movement of the visual sensing means, a movement of the body of the robot and/or a movement of the manipulation means.

Figure 1

# EP 1 870 210 A1

**Description**

Research on humanoid robots is increasingly focusing on interaction in complex environments, including autonomous decision making and complex coordinated behaviour.

Robots evaluating visual information, especially stereo information are known using the thus gained information on the environment for controlling the robots behaviour.

The invention relates to robots having a sufficient number of degrees-of-freedom to be capable of carrying out different simple or complex movements.

Object of the invention:

The invention correspondingly proposes a technique improving the interaction of a robot with its environment based on visual information on the robot's environment.

This object is achieved by means of the features of the independent claims. The depending claims develop further the central idea of the invention.

The invention can be implemented e.g. in a robot which is able to interact with the environment driven by visual perception using simple decision making and coordinated whole body motion.

One aspect proposed by the invention is to build a system that uses a definition of visual target objects, e.g. any elongated coloured object, to implement the fundamental elements of an architecture that is easily extendible to cope with more long term targets.

Aspects of embodiments of the invention are

- the storage of perceptual information as proto-objects in a short term sensory memory so that they can be used both in raw form to e.g. visually track these proto-objects in 3d or form stable object hypotheses as they are needed for reaching and grasping.

- decision mechanisms that evaluate behavioural and movement alternatives based on sensory information and internal prediction.

- a motion control system that is able to be driven by a wide range of possible target descriptions and that ensures smooth well coordinated whole body movements using a set of cost functions as null space criteria.

The perception system uses colour and stereo based 3d information to detect relevant visual stimuli and keeps this information as proto-objects in a short term sensory memory.

This sensory memory is then used to derive targets for visual tracking and to form stable object hypotheses from which movement targets for reaching movements can be derived. A prediction based decision system selects the best movement strategy and executes it in real time. The internal prediction as well as the executed movements use an integrated control system that uses a flexible target description in task space in addition to cost-functions in null space to achieve well coordinated and smooth whole body movements.

Summary of the invention

One aspect of the invention relates to an interactive robot comprising visual sensing means, manipulation means and computing means. The computing means are designed to

- process output signals from the visual sensing means in order to generate proto-objects which are stored in a memory; the proto-objects representing blobs of interest in the input field of the visual sensing means at least by a 3d position label,
- form object hypotheses as to the category of the object based on an evaluation of the proto-objects with respect to different behaviour-specific constraints, and
- based on the hypotheses and at least one proto-object as a target for a movement, decide on at least one of a visual tracking movement of the visual sensing means, a movement of the body of the robot and/or a movement of the manipulation means.

The blobs can be additionally represented by at least one of size, orientation, time of sensing and accuracy label.

The movement of the manipulation means can comprise at least one of a grasping and a poking movement.

The computing means can be designed to consider proto-objects only which have been generated in the recent past.

At least one evaluation criterion for the proto-objects can be their elongation.

At least one evaluation criterion for the proto-objects can be their distance relative to a behaviour-specific reference point.

At least one evaluation criterion for the proto-objects is their stability over time.

Another aspect of the invention relates to a method for controlling an interactive robot comprising visual sensing means, grasping means and computing means. The method comprising the steps of:

- processing output signals from the visual sensing means in order to generate proto-objects, the proto-objects representing blobs of interest in the input field of the visual sensing means at least by a 3d position label,
- forming hypotheses as to the category of the object by evaluating the proto-objects,
- based on the hypotheses and at least one proto-object as a target for a movement, deciding on at least of a visual tracking movement of the visual sensing means, a movement of the body of the robot and/or a movement of the manipulation means.

Further objects, features and advantages of the invention will become evident when reading the following detailed explanation of a non-limiting embodiment of the invention taken in conjunction with the figure of the drawing.

Figure 1 illustrates an overview of the distribution of work and the communication paths of a system according to the present invention, and

Figure 2 illustrates the transformation of the coordinates of a stereo image acquisition system to parallel aligned axes.

Generally the invention proposes to build a system that uses a definition of visual target objects, e.g. any elongated coloured object, to implement the fundamental elements of an architecture that is easily extendible to cope with more long-term targets.

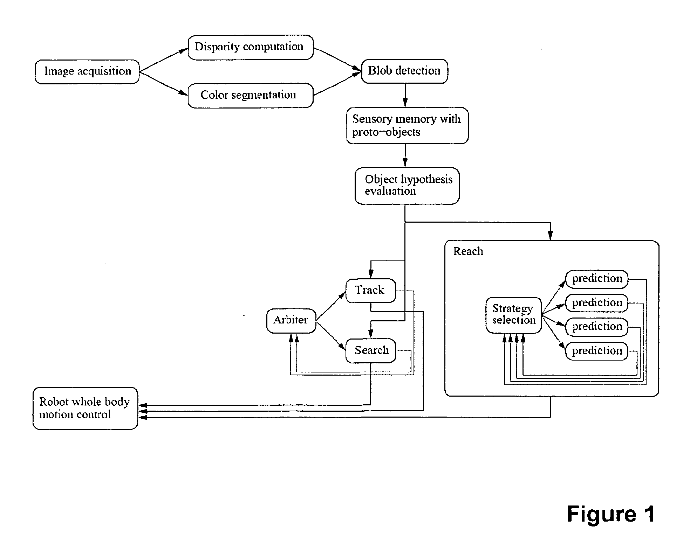

Elements of an embodiment of the invention as shown in figure 1 are:

• The storage of perceptual information as proto-objects in a short term sensory memory so that they can be used both in raw form to e.g. visually track these proto-objects in 3d or form stable object hypotheses as they are needed for reaching and grasping.

• Decision mechanisms that evaluate behavioural and movement alternatives based on sensory information and internal prediction.

• A motion control system that is able to be driven by a wide range of possible target descriptions and that ensures smooth well coordinated whole body movements using a set of cost functions as null space criteria.

The perception system uses colour and stereo based 3d information to detect relevant visual stimuli and keeps this information as proto-objects in a short term sensory memory.

This sensory memory is then used to derive targets for visual tracking and to form stable object hypotheses from which movement targets for reaching movements can be derived. A prediction based decision system selects the best movement strategy and executes it in real time. The internal prediction as well as the executed movements use an integrated control system that uses a flexible target description in task space in addition to cost-functions in null space to achieve well coordinated and smooth whole body movements.

A. System Overview

Figure 1 shows the distribution of processing and communication paths of a computing unit designed for controlling an interactive autonomous robot.

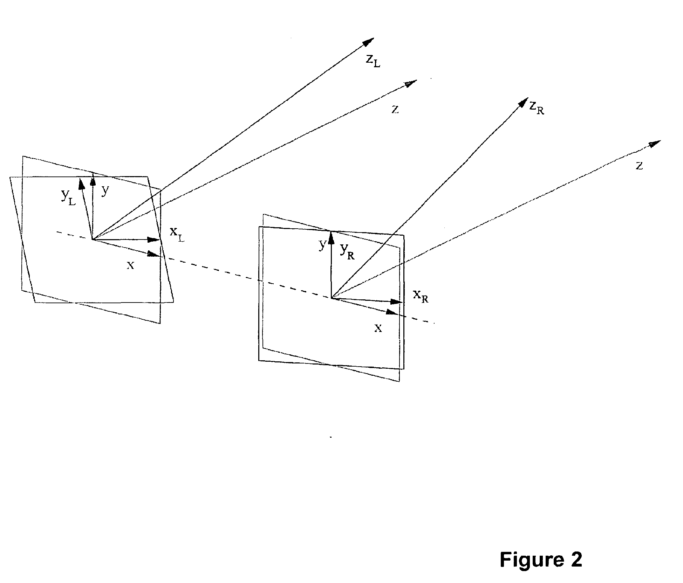

Stereo colour images (see Figure 2) are continuously acquired by an image acquisition unit and then processed in two parallel pathways. The first pathway is a colour segmentation unit designed for extracting regions of interest (which will be called "blobs" in the following).

Figure 2 illustrates how the initially not-aligned coordinates from the left camera (index "1") and right camera (index "r") are transformed in order to align them in a parallel manner.

The second pathway comprises a 3d information extraction unit, which can also be called a stereo computation block and which calculates the visual distance, for each pixel, to the image acquisition unit.

The results of the two pathways are recombined to form proto-objects in form of 3d blobs which are stabilised over time in a short term sensory memory.

Object hypotheses are generated by evaluating the current proto-objects stored in the sensory memory, using defined criteria. These hypotheses can then be used by different behaviours as targets. The behaviours can be e.g. one or more of the following:

- a searching or tracking behaviour of the head

- the walking or resting behaviour of the robot's legs

- a reaching, grasping or poking behaviour of the robot's arms.

Head targets, i.e. targets for a searching or tracking behaviour of the head, are selected using a fitness function. The fitness function assess the "fitness" of different behaviours in view of defined robot-related objectives and multiple objectives. The application of the fitness function results in a corresponding scalar fitness value.

Arm and body targets can be generated by selecting the internal prediction that is the most appropriate.

The targets for controlling the viewing direction, the hand position and orientation, and the leg motion are fed into a whole body movement system that generates motor commands.

The whole body movement system can be supported by a collision detection system based on kinematics to prevent the robot from damaging itself.

In order to incorporate the visual targets into the behaviour, the visual data and the robot postures are time labelled. Mechanisms to access the robot posture to a given time are provided. This also requires a time synchronisation between the image acquisition and the motion subsystems.

Several components of the system will be discussed in more detail in the following.

The vision and control processing is divided up into several smaller modules that interact in a data driven way in a real time environment.

B. Vision

Overview

The chain of processing starts with newly acquired colour stereo images. These images are fed into the two independent parallel pathways using colour and grey-scale images. The colour processing consists of a colour segmentation of a colour image that constructs a pixel-wise mask of colour similarity which is then segmented into compact regions.

The grey-scale images can be used to calculate image disparities between the left and right images in order to extract the 3D information.

To construct a 3-dimensional "proto-object" from the acquired vision data, each colour segment is transformed into a blob (such as e.g. an oriented ellipse) using e.g. a 2-dimensional PCA (Principal Component Analysis) of the pixel positions to estimate the principal orientation and respective sizes. Using the median of the disparities from the stereo calculations, this blob is converted to a 3d representation. Blobs which are too small or have a depth outside a given range are neglected.

In order to stabilise this 3d blob, both in time and space, it is converted into world coordinates, since it is likely that the robot has moved since the time of acquisition. To access the robot posture at the time of the image acquisition, the system uses the time stamp of the vision data and a posture buffer organised as a ring buffer that is constantly updated with the latest postures.

The 3d blobs in world coordinates are called proto-objects, since they are preliminary coarse representations of what could be physical objects. For the stabilisation in time, the sensory memory compares the current list of proto-object measurements to the predictions of the existing proto-objects for the new time step. Using a metric of blob position, size, and orientation, the sensory memory either updates existing proto-objects, instantiates new proto-objects, or deletes proto-objects that haven't been confirmed since a certain amount of time. The latter assures that occluded objects but also outliers do not remain in memory too long.

Detailed explanation of the generation of proto-objects based on blobs:

In the following a detailed explanation of the generation of object hypotheses from visual proto-object data will be given.

A proto-object as defined above can remain ambiguous and allows multiple methods of evaluation. However, each object hypothesis is based on just one specific method of evaluation of this data. In an envisaged robot interaction application the system according to the invention evaluates the visual proto-object data with respect to different of such evaluation methods at the same time, e.g. to track any type of segmentable object or region by head movement while grasping for one specific elongated object.

It is proposed to use pairs of colour images labelled with the time of acquisition. These images are, as already explained above and as illustrated in figure 1, processed in two parallel paths:

1. Stereo disparity computation:

Intensity image pairs are generated from the colour image pairs. The images are rectified, i.e. transformed so that the result corresponds to images captured e.g. with two pin-hole cameras with collinear image rows (see figure 2). The horizontal disparities between corresponding features in both images are computed if the features are sufficiently prominent.

2. Colour segmentation:

One colour image of the pair is rectified as above and converted e.g. to the HLS (Hue, Luminance, Saturation) colour space. All pixels are evaluated as to whether they lie in a certain volume in HLS space and the result is subjected to morphological operations that eliminate small regions of one class of pixel. The resulting pixels that lie in the HLS volume are grouped into regions that are contiguous in the image plane. The largest resulting groups that exceed a minimum size are selected for further processing.

For each of the groups from the colour segmentation the centre of area in the image plane $x_p$, $y_p$ and the median of the disparities d of all its pixels are computed. Also it is detected whether the group region touches the image boundaries; if so the data is labelled as inaccurate since parts of the real world object corresponding to the region are probably outside the field of view.

The orientation of the principal axis $\omega$ and the standard deviations $\sigma_{p1}$ $\sigma_{p2}$ of the pixels in the image plane are computed for each group using a principal component analysis (PCA) of the correlation matrix of the pixel positions.

Using the camera system geometry the coordinates $(x_p, y_p, d)$ and $\sigma_{p1}$ $\sigma_{p2}$ are transformed to the metric coordinates $(x_c, y_c, z_c)$ and the metric standard deviations $\sigma_{c1}$ and $\sigma_{c2}$.

Using the time label of the images the robot posture and position at the time of image capture is derived and used to transform the position to world coordinates $\vec{r}_b$=A $(x_c, y_c, z_c)$ and the principal axis orientation $\omega$ to an orientation vector $\vec{w}$ in world coordinates.

Thus a blob can be defined as a set of data consisting of the time label, the position $\vec{r}_b$, the orientation $\vec{w}$, the standard deviations $\sigma_{c1}$ and $\sigma_{c2}$, and the label indicating whether the data is accurate or inaccurate as described above.

Storing of proto-objects in the sensory memory:

Proto-objects are derived from blob data by taking the incoming blob data and comparing it to the contents of a sensory memory.

If the memory is empty a proto-object is generated from blob data by simply assigning a unique identifier to the new proto-object and inserting the incoming blob data into it.

If the sensory memory already contains one or more proto-objects a prediction for each proto-object is generated as a blob data. This predicted blob data is based on all blob data that is contained in the proto-object and is generated for the current time.

Each incoming blob is either inserted into an existing proto-object or a newly generated one based on a minimum distance between incoming blob and predicted blob so that all incoming blobs are assigned to unique identifiers.

The metric for the distance computation is based on both Euclidean distance and relative rotation angle.

The inserted blob data is also modified so that the orientation distance of the new blob is always less equal 90 degrees. This is possible because the blob orientation description is ambiguous with respect to 180 degree flips.

Every time new incoming blob data is generated by the processing, its time label is compared to the time labels of the blob data inside all proto-objects and all blob data that is older than a certain threshold is deleted. This is done even if the image processing does not find any blobs in the image pairs. If a proto-object does not contain any blob data it is also deleted from sensory memory.

The prediction as needed for the comparison above is derived from the blob data inside the proto-object by a low pass filter on position $\vec{r}_b$, orientation $\vec{w}$, and standard deviations $\sigma_{c1}$ $\sigma_{c2}$.

C. Behaviour Selection

Object hypotheses are generated by evaluating the proto-objects stored in the sensory memory for certain criteria. E.g. the elongation of the proto-objects can be chosen as an evaluation criterion for object hypotheses, i.e.

based on the ellipsoids' radii, elongated proto-objects are evaluated as behaviour targets, whereas more spherical proto-objects are ignored. The existence of these elongated object hypotheses are a major criterion in the behaviour selection mechanisms.

E.g. the two following selection mechanisms can be used to control the two main behaviour groups:

- The search and track behaviours can be selected e.g. based on a fitness function as described in T. Bergener, C. Bruckhoff, P. Dahm, H. Janssen, F. Joublin, R. Menzner, A. Steinhage, and W. von Seelen, "Complex behaviour by means of dynamical systems for an anthropomorphic robot," Neural Networks, 1999.

The output of the sensory memory can be used e.g. to drive two different head behaviours:

1) searching for objects and
2) gazing at or tracking objects or blobs.

Separate from these behaviours is provided a decision instance or "arbiter" that decides which behaviour should be active at any time. The decision of the arbiter is solely based on a scalar value that is supplied from the simulation of the behaviours, which scalar value is a "fitness value". This fitness value describes how well a behaviour can be executed at any time. In this concrete case tracking needs at least an inaccurate blob position to point the gaze direction at, but of course can also use a full object hypothesis. Thus the tracking behaviour will output a fitness of 1 if any blob or object is present and a 0 otherwise. The search behaviour has no prerequisites at all and thus its fitness is fixed to 1.

For the case of this very simple behaviour setup, the arbitration is of course trivial. However, the invention proposes to use a competitive dynamic system similar to the one described in Bergener et al. 99 (see above) for extensibility. Thus the arbiter uses a vector made from the scalar fitness values resulting from the simulation of all behaviours, as an input to a competition dynamics that calculates an activation value for each behaviour. The competition dynamics uses a pre-specified inhibition matrix that can be used to encode directed inhibition - behaviour A inhibits behaviour B but not vice versa - to specify behaviour prioritization and even behaviour cycles. In this case tracking can be prioritized to searching by such a directed inhibition.

The search behaviour is realized by means of a very low resolution (5 by 7) inhibition of return map with a simple relaxation dynamics. If the search behaviour is active and new vision data is available it will increase the value of the current gaze direction in the map and select the lowest value in the map as the new gaze target. Additionally the whole map is subject to a relaxation to 0 and a small additive noise.

This generates a visual search pattern with a random sequence of fixations that takes into account all visual information immediately and results in an efficient and fast finding of relevant objects. The size of the inhibition of return map is derived from the field of view of the cameras relative to the pan/tilt movement range. Higher resolutions will not change the searching significantly. The relaxation time constant is set in the second range so that motion of the robot, which will effectively invalidate the inhibition map, is not a problem.

The tracking behaviour can be realized as a multi-tracking of 3-dimensional points. The behaviour takes all relevant proto-objects and object hypotheses into account and calculates the pan/tilt angles for centring them in the field of view. Then a cost function with a trapezoidal shape in pan/tilt coordinates is used to find the pan/tilt angle that will keep the maximum number of objects in the effective field of view of the cameras and this is sent as the pan/tilt command. Since the tracking behaviour always uses the stabilized output of the sensory memory the robot will still look at a certain position even if a blob disappears for a short time. This significantly improves the performance of the overall system.

The other behaviours using hard coded criteria based on internal predictions as will be discussed in the next section.

Using these selection mechanisms, the system is able to search for elongated objects or track one or more of them. Simultaneously, the robot can reach for the elongated object using the most suitable arm with the palm being aligned to the object's principal axis; if the object is too close or too far away, it will also choose the appropriate walking motion. If no target is available, the robot will stop walking and move its arms into a resting position.

The evaluations are also based on the blob data predictions of all proto-objects. The label of this prediction is set to "memorised" if the latest blob data in the proto-object is older than the prediction time. Otherwise, it is set to the label of the latest blob data in the proto-object.

A minimum criterion that is already sufficient for the behaviour of fixation and tracking is a blob labelled as inaccurate. Any blob labelled as inaccurate can be used for an approaching behaviour. If one considers more severe criteria such as stable values $\sigma_{c1}$ and $\sigma_{c2}$ and a maximum distance to avoid relying on insufficient vision data one extract stable object hypotheses. To implement manipulation behaviours like "poke balloon" additional constraints can be put on the stable object hypotheses such as roughly spherical shape

$$((\sigma_{c1} - \sigma_{c2}) \ / \ \sigma_{c1} < \text{threshold})$$

and easiest execution of the behaviour (minimum distance to a behaviour specific reference point, e.g. for poking in front of the body). A behaviour like "power grasp object" will require a minimum elongation for grasp stability

$$((\sigma_{c1} - \sigma_{c2}) \ / \ \sigma_{c1} > \text{threshold})$$

and a suitable diameter

$$(\text{threshold} < \sigma_{c2} < \text{threshold}).$$

E. Whole Body Motion and Prediction

Using the targets for the head, arms, and legs, the system is able to generate motor commands using a whole body controller that the basics of which are described in M. Gienger, H. Janssen, and C. Goerick, "Task oriented whole body motion for humanoid robots," in Humanoids, 2005.

The principle of the whole body motion is to use a flexible description of the task space and use the null space to meet several optimisation criteria such as avoidance of joints limits and centre of mass shift compensation.

Since the computational costs for the whole body motion are low enough, it can not only be used to generate the robot motion directly but also to simulate different behaviours on a time scale faster than real time due to its fast convergence.

Due to this, it is used to support the behaviour selection of the walking and arm movements. Four internal simulations continuously try to reach the target object from the current posture using the left arm or the right arm both while standing or walking. A metric is then used to select the best suited behaviour that is then run at real time.

F. Collision Detection

In order to ensure safety of the robot during operation, a real time collision detection algorithm is used. The collision detection uses an internal hierarchical description of the robot's body in terms of spheres and sphere-swept lines that is used together with the kinematic information to calculate the distances between the segments (limbs and body parts) of the robot. If any of these distances falls below a threshold the high-level motion control will be disabled, so that only the dynamic stabilisation of the bipedal walking is still active.

The collision detection acts as a last safety measure and is not triggered during normal operation of the robot.

Additionally a simple collision avoidance limits the position of all movement targets so that e.g. wrist target positions inside or very close to the body are never generated.

V. SUMMARY

A design and implementation of a system is introduced with which a humanoid robot is able to interact with its visual environment using both legs and arms.

Targets for the interaction are based on visually extracted proto-objects. A control system allows the robot to increase its range of interaction, achieve multiple targets simultaneously, and avoid undesired postures. Several different selection mechanisms are used to switch between different kinds of behaviours at any time and posture.

**Claims**

1. An interactive robot comprising visual sensing means, manipulation means and computing means, the computing means being designed to

- process output signals from the visual sensing means in order to generate proto-objects which are stored in a memory,
the proto-objects representing blobs of interest in the input field of the visual sensing means at least by a 3d position label,
- form object hypotheses as to the category of the object based on an evaluation of the proto-objects with respect to different behaviour-specific constraints,
- based on the hypotheses and at least one proto-object as a target for a movement, decide on at least one of a visual tracking movement of the visual sensing means, a movement of the body of the robot and/or a movement of the manipulation means.

2. The robot according to claim 1,
wherein the blobs are additionally represented by at least one of size, orientation, time of sensing and accuracy label.

3. The robot according to claim 1 or 2,
wherein the movement of the manipulation means comprises at least one of a grasping and a poking movement.

4. The robot according to any of the preceding claims,
wherein the computing means is designed to consider proto-objects only which have been generated in the recent past.

5. The robot according to any of the preceding claims,
wherein at least one evaluation criterion for the proto-objects is their elongation.

6. The robot according to any of the preceding claims,
wherein at least one evaluation criterion for the proto-objects is their distance relative to a behaviour-specific reference point.

7. The robot according to any of the preceding claims,
wherein at least one evaluation criterion for the proto-objects is their stability over time.

8. A method for controlling an interactive robot comprising visual sensing means, grasping means and computing means,
the method comprising the steps of:

- processing output signals from the visual sensing means in order to generate proto-objects,
the proto-objects representing blobs of interest in the input field of the visual sensing means at least by a 3d position label,
- forming hypotheses as to the category of the object by evaluating the proto-objects,
- based on the hypotheses and at least one proto-object as a target for a movement, deciding on at least of a visual tracking movement of the visual sensing means, a movement of the body of the robot and/or a movement of the manipulation means.

9. The method according to claim 7,
comprising the step of discarding proto-objects after the lapse of a defined time period or once a movement of the body of the robot has reached a defined threshold value.

10. The method according to claim 8 or 9,
wherein the blobs are additionally represented by at least one of size, orientation, time of sensing and accuracy label.

11. The method according to any of claims 8 to 10,
wherein the movement of the manipulation means comprises at least one of a grasping and a poking movement.

12. The method according to any of the claims 8 to 11,
wherein the computing means is designed to consider proto-objects only which have been generated in the recent past.

13. The method according to any of the claims 8 to 12,
wherein at least one evaluation criterion for the proto-objects is their elongation.

**14.** The method according to any of the claims 8 to 13,
wherein at least one evaluation criterion for the proto-objects is their distance relative to a behaviour-specific reference point.

**15.** The method according to any of the claims 8 to 14,
wherein at least one evaluation criterion for the proto-objects is their stability over time.

**16.** A computer software program product,
supporting a method according to any of claims 8 to 15 when run on a computing device of an interactive robot.

**Figure 1**

**Figure 2**

**European Patent Office**

**EUROPEAN SEARCH REPORT**

Application Number

EP 06 01 2899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NATALE L ET AL: "From sensorimotor development to object perception" HUMANOID ROBOTS, 2005 5TH IEEE-RAS INTERNATIONAL CONFERENCE ON DEC. 5, 2005, PISCATAWAY, NJ, USA,IEEE, 5 December 2005 (2005-12-05), pages 226-231, XP010880403 ISBN: 0-7803-9320-1 * page 227, right-hand column, line 29 - page 228, left-hand column, line 10 * * page 228, left-hand column, line 18 - line 33 * ----- | 1-3,8, 10,11,16 | INV. B25J9/16 |
| A | NATALE L ET AL: "Exploring the world through grasping: a developmental approach" COMPUTATIONAL INTELLIGENCE IN ROBOTICS AND AUTOMATION, 2005. CIRA 2005. PROCEEDINGS. 2005 IEEE INTERNATIONAL SYMPOSIUM ON ESPOO, FINLAND 27-30 JUNE 2005, PISCATAWAY, NJ, USA,IEEE, 27 June 2005 (2005-06-27), pages 559-565, XP010861058 ISBN: 0-7803-9355-4 * page 559, right-hand column, line 14 - line 18 * * page 560, right-hand column, line 26 - line 31 * * page 561, left-hand column, line 29 - line 35 * * page 561, left-hand column, line 50 - line 53 * ----- -/-- | 1-16 | TECHNICAL FIELDS SEARCHED (IPC) B25J |

The present search report has been drawn up for all claims

| Place of search | Date of completion of the search | Examiner |
|---|---|---|
| Munich | 21 March 2007 | Lumineau, Stéphane |

**European Patent Office**

## EUROPEAN SEARCH REPORT

Application Number

EP 06 01 2899

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ORABONA F ET AL: "Object-based Visual Attention: a Model for a Behaving Robot" COMPUTER VISION AND PATTERN RECOGNITION, 2005. CVPR 2005. IEEE COMPUTER SOCIETY CONFERENCE ON SAN DIEGO, CA, USA 20-26 JUNE 2005, PISCATAWAY, NJ, USA,IEEE, 20 June 2005 (2005-06-20), XP010870087 ISBN: 0-7695-2372-2 * abstract * * page 1, right-hand column, line 8 - line 14 * * page 4, left-hand column, line 12 - line 26 * * page 5, left-hand column, line 1 - line 4 *<br>----- | 1-16 | |
| A,D | BERGENER T ET AL: "Complex behavior by means of dynamical systems for an anthropomorphic robot" NEURAL NETWORKS, ELSEVIER SCIENCE PUBLISHERS, BARKING, GB, vol. 12, no. 7-8, October 1999 (1999-10), pages 1087-1099, XP004180499 ISSN: 0893-6080 * the whole document *<br>----- | 1-16 | TECHNICAL FIELDS SEARCHED (IPC) |
| A,D | GIENGER M ET AL: "Task-oriented whole body motion for humanoid robots" HUMANOID ROBOTS, 2005 5TH IEEE-RAS INTERNATIONAL CONFERENCE ON DEC. 5, 2005, PISCATAWAY, NJ, USA,IEEE, 5 December 2005 (2005-12-05), pages 238-244, XP010880405 ISBN: 0-7803-9320-1 * the whole document *<br>----- | 1-16 | |

The present search report has been drawn up for all claims

| Place of search | Date of completion of the search | Examiner |
|---|---|---|
| Munich | 21 March 2007 | Lumineau, Stéphane |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. BERGENER ; C. BRUCKHOFF ; P. DAHM ; H. JANSSEN ; F. JOUBLIN ; R. MENZNER ; A. STEINHAGE ; W. VON SEELEN.** Complex behaviour by means of dynamical systems for an anthropomorphic robot. *Neural Networks,* 1999

- **M. GIENGER ; H. JANSSEN ; C. GOERICK.** Task oriented whole body motion for humanoid robots. *Humanoids,* 2005